# EUROPÄISCHE PATENTSCHRIFT

(11) **EP 1 729 988 B1**
(45) Veröffentlichungstag und Bekanntmachung des Hinweises auf die Patenterteilung: **13.02.2008**
(21) Anmeldenummer: 05739586.5
(22) Anmeldetag: 22.03.2005
(51) Int. Cl.: B60J 7/00

(54) **ANORDNUNG ZUM VERSCHLIESSEN EINER ÖFFNUNG EINES FAHRZEUGS MIT EINEM SPLITTERSCHUTZELEMENT**
ARRANGEMENT FOR SEALING AN OPENING IN A VEHICLE WITH A CHIPPING PROTECTOR ELEMENT
DISPOSITIF DE FERMETURE D'UNE OUVERTURE DE VEHICULE A MOTEUR POURVU D'UN ELEMENT DE PROTECTION CONTRE LES ECLATS DE VERRE

(30) Priorität: 31.03.2004 DE 102004015920
(43) Veröffentlichungstag der Anmeldung: 13.12.2006
(73) Patentinhaber: Webasto AG, 82131 Stockdorf (DE)
(72) Erfinder: ERBECK, Gerit, 85467 Niederneuching (DE); PÄTZ, Werner, 86928 Hofstetten (DE); BOEHM, Hubert, 86926 Greifenberg (DE)
(86) Internationale Anmeldenummer: PCT/EP2005/003011
(87) Internationale Veröffentlichungsnummer: WO 2005/095136

(56) Entgegenhaltungen:
- WO-A-03/041980
- WO-A-20/04073976
- FR-A- 2 722 776

## Beschreibung

Die vorliegende Erfindung betrifft eine Anordnung zum Verschließen einer Öffnung eines Fahrzeugs mit einer Scheibe und einem Splitterschutzelement, insbesondere einen Glasdeckel für eine Dachöffnung.

Um einen Glasdeckel eines Fahrzeugdaches mit einer Splitterschutzfunktion zu versehen, ist es bekannt, an der Unterseite der Glasscheibe des Deckels eine Splitterschutzfolie aufzukleben, welche in ihrem Randbereich beispielsweise in die Umschäumung der Scheibe eintaucht, mittels welcher das Deckelinnenblech mit der Scheibe verbunden ist, siehe z.B. DE 43 23 140 A1. Bei Bruch der Scheibe bleiben die Splitter an der Splitterschutzfolie kleben, welche in ihrem Umfangsrandbereich in der Deckelumschäumung befestigt ist und auf diese Weise von der Umschäumung aufgespannt bleibt, wodurch das Eindringen von Splitter in den Fahrzeuginnenraum bzw. das Herausschleudern von Gegenständen aus dem Fahrzeuginnenraum verhindert werden kann.

Ein ähnlicher Scheibenaufbau ist in der DE 101 55 168 A1 beschrieben. Ferner sind ähnliche Deckel auch in der DE 101 51 156 A1 und DE 102 06 717 A1 beschrieben, wobei in diesen Schriften auch eine Abwandlung beschrieben ist, bei welcher der Umfangsrandbereich der Splitterschutzfolie umgeschlagen und mit dem Deckelinnenblech verschraubt ist.

In der DE 41 05 396 A1 ist ein Solardeckel für ein Fahrzeugdach beschrieben, bei welchem an der Unterseite der Scheibe zwischen zwei Klebeschichten eingebettete Solarzellen angebracht sind, wodurch ein Solarzellenfolienverbund gebildet wird, der im Randbereich in die Umschäumung des Deckels hinein ragt.

In der nicht vorveröffentlichten, älteren deutschen Patentanmeldung 103 06 957.7 ist ferner ein Glasdeckel beschrieben, bei welchem an der Unterseite der Scheibe eine Splitterschutzfolie angeklebt ist, die in ihrem Randbereich in eine dauerelastische Verklebung hineinragt, mittels welcher ein Halteelement zum Anbinden des Deckels an die Fahrzeugkarosserie an der Scheibe angeklebt ist.

Nachteilig bei diesen bekannten Glasdeckeln ist, dass die Anbauteile, wie Rahmenteile, Deckelinnenbleche oder Blenden, mit zusätzlichen Klebematerialien, beispielsweise einer Polyurethanumschäumung oder einer Kleberaupe, mit der Glasscheibe verbunden werden müssen, wobei ferner für die Anbindung des Randbereichs der Splitterschutzfolie an die Umschäumung oder Verklebung bzw. an das Deckelinnenblech oft aufwendige Maßnahmen durchgeführt werden müssen, beispielsweise eine Perforation oder eine spezielle Oberflächengestaltung des Randbereichs der Splitterschutzfolie.

In der US 6,675,550 B1 ist eine Gebäudeverglasung beschrieben, wobei eine Lage aus Ethylen/Methacrylsäure-Copolymeren als Splitterschutzelement zwischen zwei Glasscheiben angeordnet its, um diese zu verbinden.

In der US 6,237,306 B1 ist eine Gebäudeverglasung beschrieben, wobei eine Lage aus Ethylen/Methacrylsäure-Copolymeren als Splitterschutzelement auf eine Glasscheibe aufgeklebt ist und mit dieser zusammen in einen Fensterrahmen eingefasst ist. auf der anderen Seite des Splitterschutzelements ist eine nicht in dem Rahmen eingefasste Schutzschich aufgeklebt.

Ein weiteres Splitterschutzelement ist in WO 03/041980 offenbart.

Es ist Aufgabe der vorliegenden Erfindung, eine Anordnung zum Verschließen einer Öffnung eines Fahrzeugs, insbesondere einen Deckel für eine Dachöffnung, zu schaffen, wobei ein Splitterschutzelement vorgesehen sein soll und dennoch die Herstellung der Anordnung möglichst kostengünstig sein soll.

Diese Aufgabe wird erfindungsgemäß gelöst durch eine Anordnung gemäß Anspruch 1. Dabei ist vorteilhaft, dass dadurch, dass eine Lage aus Klebematerial vorgesehen ist, die einerseits bereits selbst, d.h. ohne zusätzliche Folie oder Platte, als flächiges Splitterschutzelement wirkt und die andererseits dazu dient, ein strukturelles Anbauteil, d.h. ein Verstärkungselement, ein Halteelement oder eine Blende, direkt mit der Scheibe zu verkleben, eine besonders einfache und kostengünstige Herstellung der Anordnung ermöglicht wird.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig. 1: eine schematische Ansicht eines erfindungsgemäßen Glasdeckels für ein Fahrzeugdach, gesehen aus dem Fahrzeuginnenraum;
- Fig. 2: eine Schnittansicht entlang der Linie A-A von Fig. 1, wobei der Deckel in Fig. 2 bezüglich der Darstellung von Fig. 1 um 180° gedreht dargestellt ist; und
- Fig.3-6: Ansichten ähnlich zu Fig. 2, wobei jedoch abgewandelte Ausführungsformen dargestellt sind.

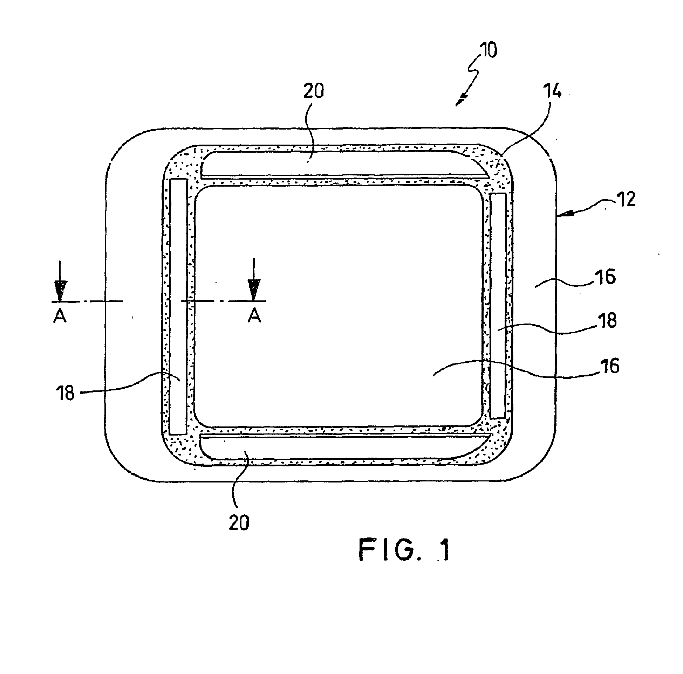

In Fig. 1 ist schematisch ein Glasdeckel 10 für eine Öffnung in einem Fahrzeugdach in einer Ansicht aus dem Fahrzeuginnenraum gezeigt. Der Deckel 10 umfaßt eine mindestens teilweise transparente Glasscheibe 12, an deren Unterseite eine Lage 14 aus einem flächigen Klebematerial angebracht ist. Bei dem Klebematerial kann es sich beispielsweise um PU, PVB, EVA oder lonomere in Platten- oder Folienform handeln. Die mechanischen Eigenschaften der Lage 14 aus Klebematerial sind dabei so gewählt, dass die Lage 14 bei Bruch der Scheibe 12 in sich fest genug ist, um die Splitter der Scheibe 12 am Eindringen in den Fahrzeuginnenraum zu hindern bzw. das Herausschleudern von Gegenständen aus dem Fahrzeuginnenraum durch die Dachöffnung nach außen zu verhindern. Mit anderen Worten, die Lage 14 aus Klebematerial behält ihre mechanische Integrität auch bei Bruch der Scheibe 12 und ohne das Vorsehen einer später näher erläuterten Deckschicht 16 bei. Insbesondere bleibt die Lage 14, wenn sie mit einem mit der Fahrzeugkarosserie verbundenen Rahmen fest verbunden ist, auch bei Bruch der Scheibe 12 auch ohne Deckschicht 16 von diesem Rahmen aufgespannt.

Ferner dient die Lage 14 gemäß Fig. 1 dazu, zwei Verstärkungsprofile 18 sowie zwei Haltewinkel 20 direkt mit der Unterseite der Scheibe 12 zu verkleben. Außerdem ist auf der zum Fahrzeuginnenraum weisenden Seite der Lage 14 aus Klebematerial eine Deckschicht 16 aufgebracht, die beispielsweise von einer PET-Folie, PET-Platte, PMMA-Folie oder PMMA-Platte gebildet werden kann und durch entsprechende Oberflächenfestigkeit bzw. Oberflächengestaltung bzw. Einfärbung einer optischen, haptischen und/oder kratzerschützenden Funktion dienen kann.

Eine Splitterschutzfunktion muss die Deckfolie 16 nicht erfüllen, da die Klebelage 14 bereits alleine die erforderliche Festigkeit aufweist. Die Deckfolie 16 ist notwendigerweise im Bereich der Verstärkungsprofile 18 bzw. der Haltewinkel 20 ausgespart, so dass diese Anbauteile 18, 20 direkt an der Klebelage 14 anliegen und damit eine kraftschlüssige Verbindung hergestellt wird.

Im Bereich der Verstärkungsprofile 18 und der Haltewinkel 20 kann an der Unterseite der Glasscheibe 12 eine Frittenbedruckung 22 vorgesehen sein.

Die Haltewinkel 20 dienen zur mechanischen Anbindung des Deckels 10 an die Fahrzeugkarosserie, wobei die Haltewinkel 20 üblicherweise mittels einer Schraubverbindung an eine entsprechende Verstellmechanik für den Deckel 10 angebunden sind.

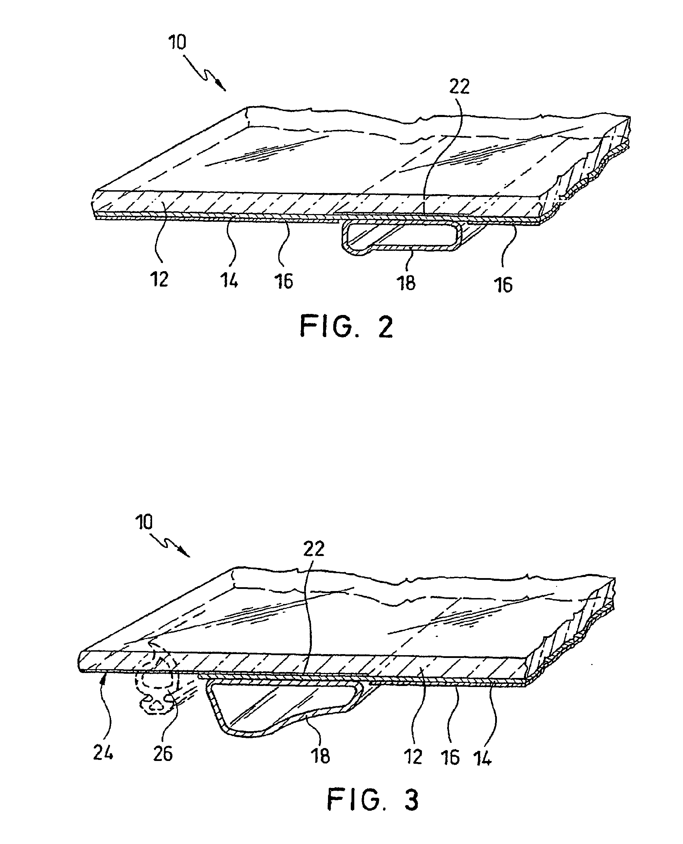

Bei der Ausführungsform gemäß Fig. 1 und Fig. 2 erstreckt sich die Klebelage 14 über die volle Fläche der Scheibe 12 bis zu deren unmittelbarem Rand. Das gleiche gilt für die Deckfolie 16, mit Ausnahme der Bereiche, in welchen die Verstärkungsprofile 18 bzw. die Haltewinkel 20 mittels der Klebelage 14 an die Scheibenunterseite angeklebt sind.

Bei dem Anbauteil bzw. den Anbauteilen kann es sich statt um ein Verstärkungselement für die Scheibe 12 oder um ein Halteelement zum Verbinden der Scheibe 12 mit der Fahrzeugkarosserie oder einem mit der Fahrzeugkarosserie verbundenen Element auch um eine Blende handeln. Vorzugsweise handelt es sich bei dem Anbauteil bzw. den Anbauteilen um ein Deckelinnenblech, ein Verstärkungsprofil oder ein als Anlagefläche für eine Dichtung oder eine Klebeverbindung zu einem karosseriefesten Rahmen dienendes Profil. Vorzugsweise sind das Anbauteil bzw. die Anbauteile im Randbereich der Scheibe 12 angeordnet, wobei die Lage 14 aus Klebematerial vorzugsweise mindestens den zentralen Bereich der Scheibe 14 vollständig bedeckt.

Die Erfindung ist insofern vorteilhaft, als ein zusätzlicher Klebe- oder Schäumprozess zum Verbinden der Anbauteile mit der Glasscheibe 12 entfallen kann, da die Anbindung der Anbauteile im gleichen Prozeß wie die Applikation der als Splitterschutzelement wirkenden Klebelage 14 und der Deckschicht 16 erfolgen kann, wodurch Prozesszeit und Material eingespart werden kann. Es kann dabei eine vollflächige Splitterschutzfunktion ohne Unterbrechung durch Anbauteile bzw. Halteeinrichtungen realisiert werden. Ferner kann dadurch, dass die Klebelage 14 bereits selbst als Splitterschutzelement wirkt und mit entsprechenden Halteelementen bzw. Rahmenelementen verklebt ist, auf eine aufwendige Gestaltung bzw. Bearbeitung des Randbereichs einer Splitterschutzfolie bzw. -platte gemäß dem Stand der Technik zur besseren Anbindung an eine Umschäumung bzw. eine Verklebung entfallen.

In Fig. 3 ist eine abgewandelte Ausführungsform gezeigt, wobei in dem Randbereich 24 der Scheibe 12 zwischen dem Verstärkungsprofil 18 und der Randkante die Lage 14 aus Klebematerial sowie die Deckschicht 16 ausgespart sind, so dass in diesem Bereich die Unterseite der Glasscheibe 12 frei liegt. Dieser frei liegende Bereich 24 dient als Anlagefläche für eine Dichtung 26.

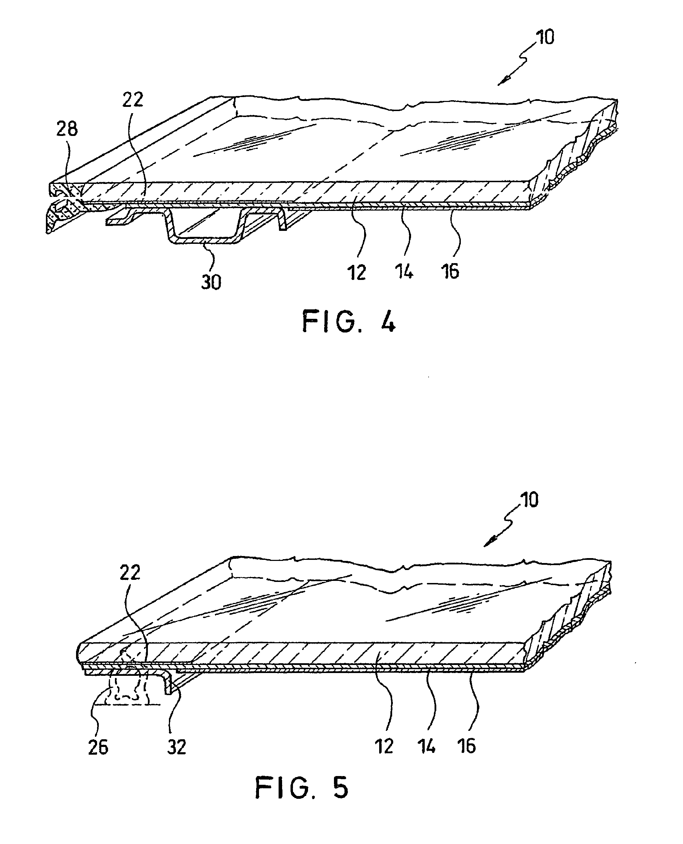

In Fig. 4 ist eine weitere abgewandelte Ausführungsform gezeigt, bei welcher ebenfalls ein Randbereich 24 der Unterseite der Scheibe 12 von der Bedeckung durch die Klebelage 14 ausgespart ist, wobei hier jedoch der ausgesparte Bereich 24 zur Anbringung einer Randumschäumung 28 der Scheibe 12, beispielsweise aus Polyurethan, dient. Ferner dient bei dem Beispiel von Fig. 4 die Klebelage 14 nicht zur Anbringung eines Verstärkungsprofils 18, sondern zur Anbringung eines Deckelinnenblechs 30 an der Unterseite der Scheibe 12. Bei der Ausführungsform von Fig. 4 handelt es sich um einen verstellbaren Deckel, beispielsweise eines Schiebedaches oder Schiebehebedaches.

In Fig. 5 ist eine Ausführungsform gezeigt, bei welcher die Klebelage 14 zur Anbindung eines Blechprofils 32 im Randbereich der Scheibe 12 an die Unterseite der Scheibe 12 dient, wobei das Blechprofil 32 seinerseits als Anlagefläche für eine Dichtung 26 dient.

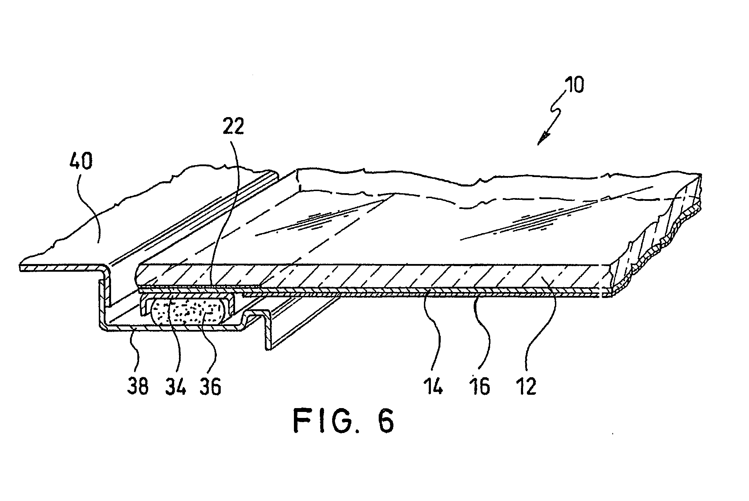

In Fig. 6 ist eine Ausführungsform dargestellt, bei welcher es sich bei dem Glasdeckel 10 um ein sogenanntes Glasfestelement handelt, welches in die Dachöffnung des Fahrzeugs eingeklebt ist. Zu diesem Zweck ist im Randbereich der Scheibe 12 mittels der Klebelage 14 ein Blechprofil 34 an die Scheibenunterseite angeklebt, welches als Angriffsfläche für eine dichtende Klebstoffverbindung 36 dient, mittels welcher das Blechprofil 34 - und damit die Scheibe 12 - mit einem karosseriefesten Dachrahmen 38 verklebt ist, der seinerseits mit der Dachhaut 40 fest verbunden ist. Die Klebeverbindung 36 ist vorzugsweise als Kleberaupe ausgebildet.

Bei allen Ausführungsformen kann das Material der als Splitterschutzelement wirkenden Klebelage eine Reißfestigkeit von mindestens 15 MJ/m³, vorzugsweise mindestens 25 MJ/m³, sowie eine Zugfestigkeit von mindestens 10MPa, vorzugsweise mindestens 20MPa, gemessen jeweils nach dem US-amerikanischen Test ASTM D-638, aufweisen. Der Elastizitätsmodul kann mindestens 50MPa, vorzugsweise mindestens 150 MPa, gemessen nach dem US-amerikanischen Test ASTM D-5026, betragen.

Vorzugsweise handelt es sich bei dem Material der als Splitterschutzelement wirkenden Klebelage um Ethylen/Methacrylsäure-Copolymere. Ein solches Material wird unter der Markenbezeichnung SentryGlas Plus von der Firma DuPont, Wilmington, USA, vertrieben. Dabei handelt es sich um ein lonomer-Material. Die Schichtdicke beträgt vorzugsweise zwischen 1,5 und 2,3 mm.

### Bezugszeichenliste

- 10: Glasdeckel
- 12: Glasscheibe
- 14: Klebelage
- 16: Deckfolie
- 18: Verstärkungsprofil
- 20: Haltewinkel
- 22: Frittenbedruckung
- 24: von 14 freier Randbereich von 12
- 26: Dichtung
- 28: Umschäumung
- 30: Deckelinnenblech
- 32: Blechprofil
- 34: Blechprofil
- 36: Kleberaupe
- 38: Dachrahmen
- 40: Dachhaut

## Patentansprüche

1. Anordnung zum Verschließen einer Öffnung eines Fahrzeugs, mit einer Scheibe (12), wobei eine als flächiges Splitterschutzelement wirkende Lage (14) aus Klebematerial mit einer Seite fest an der Scheibe angebracht ist **dadurch gekennzeichnet, daß** die andere Seite der Lage aus Klebematerial dazu dient, daß mindestens ein Anbauteil (18, 20, 30, 32, 34) mit der Scheibe verklebt ist, wobei es sich bei dem Anbauteil um ein Verstärkungselement (18) für die Scheibe, ein Halteelement (30, 32, 34) zum Verbinden der Scheibe mit der Fahrzeugkarosserie oder einem mit der Fahrzeugkarosserie verbundenen Element (38), oder eine Blende handelt.

2. Anordnung gemäß Anspruch 1, **dadurch gekennzeichnet, dass** es sich bei dem Anbauteil um ein Deckelinnenblech (30), ein Verstärkungsprofil (18) oder ein als Anlagefläche für eine Dichtung (26) oder eine Klebeverbindung (36) zu einem karosseriefesten Rahmen (38) dienendes Profil (32, 34) handelt.

3. Anordnung gemäß Anspruch 1 oder 2, **dadurch gekennzeichnet, dass** das Anbauteil (18, 20, 30, 32, 34) im Randbereich der Scheibe (12) angeordnet ist.

4. Anordnung gemäß einem der vorhergehenden Ansprüche, **dadurch gekennzeichnet, dass** die Lage (14) aus Klebematerial mindestens den Durchsichtsbereich der Scheibe (12) vollständig bedeckt.

5. Anordnung gemäß einem der vorhergehenden Ansprüche, **dadurch gekennzeichnet, dass** die von der Scheibe (12) weg weisende Seite der Lage (14) aus Klebematerial in den Bereichen außerhalb des mit dem Anbauteil (18, 20, 30, 32, 34) versehenen Bereichs mindestens zum Teil mit einer Deckfolie (16) bedeckt ist.

6. Anordnung gemäß Anspruch 5, **dadurch gekennzeichnet, dass** die Deckfolie (16) kratzfest, mit einer geprägten Oberfläche und/oder eingefärbt ausgebildet ist.

7. Anordnung gemäß Anspruch 6, **dadurch gekennzeichnet, dass** die Deckfolie (16) aus PET, PC oder PMMA ausgebildet ist.

8. Anordnung gemäß einem der vorhergehenden Ansprüche, **dadurch gekennzeichnet, dass** es sich bei dem Klebematerial der Lage (14) um PU, PVB, EVA oder lonomere handelt.

9. Anordnung gemäß einem der vorhergehenden Ansprüche, **dadurch gekennzeichnet, dass** das Klebematerial der Lage (14) in Plattenform oder Folienform auf die Scheibe (12) aufgebracht ist.

10. Anordnung gemäß einem der vorhergehenden Ansprüche, **dadurch gekennzeichnet, dass** es sich bei der Scheibe (12) um eine Scheibe aus transparentem oder teiltransparentem Glas handelt.

11. Anordnung gemäß einem der vorhergehenden Ansprüche, **dadurch gekennzeichnet, dass** sich die Lage (14) aus Klebematerial zum Rand der Scheibe (12) hin nicht über die Position des Anbauteils (18, 30, 32, 34) hinaus erstreckt.

12. Anordnung gemäß einem der vorhergehenden Ansprüche, **dadurch gekennzeichnet, dass** der Bereich (24) zwischen dem Anbauteil (18) und dem Rand der Scheibe (12) als Anlagefläche für eine Dichtung (26) dient.

13. Anordnung gemäß einem der vorhergehenden Ansprüche, **dadurch gekennzeichnet, dass** es sich bei der Anordnung um einen Deckel (10) und bei der Öffnung um eine Dachöffnung handelt.

14. Anordnung gemäß Anspruch 13, **dadurch gekennzeichnet, dass** der Deckel (10) verstellbar ist und es sich bei dem Anbauteil um ein mit der Verstellmechanik verbundenes Haltelement (20, 30) handelt.

15. Anordnung gemäß einem der Ansprüche 1 bis 13, **dadurch gekennzeichnet, dass** es sich bei dem Anbauteil um ein Halteelement (34) handelt, welches in einen Dachrahmen (38) fest eingeklebt ist.

16. Anordnung gemäß einem der vorhergehenden Ansprüche, **dadurch gekennzeichnet, dass** die Scheibe (12) im Bereich des Anbauteils (18, 30, 32, 34) mit einer Fritte (22) bedruckt ist.

17. Anordnung gemäß Anspruch 8, **dadurch gekennzeichnet, dass** es sich bei dem Klebematerial der Lage (14) um ein aus Ethylen/Methacrylsäure-Copolymeren bestehendes Material handelt.

18. Anordnung gemäß einem der vorhergehenden Ansprüche, **dadurch gekennzeichnet, dass** das Klebematerial der Lage (14) eine Reißfestigkeit von mindestens 15 MJ/m³, vorzugsweise mindestens 25 MJ/m³, aufweist.

19. Anordnung gemäß einem der vorhergehenden Ansprüche, **dadurch gekennzeichnet, dass** das Klebematerial der Lage (14) eine Zugfestigkeit von mindestens 10MPa, vorzugsweise mindestens 20MPa, aufweist.

20. Anordnung gemäß einem der vorhergehenden Ansprüche, **dadurch gekennzeichnet, dass** das Klebematerial der Lage (14) einen Elastizitätsmodul von mindestens 50MPa, vorzugsweise mindestens 150 MPa aufweist.

## Claims

1. Arrangement for closing an opening of a motor vehicle, having a pane (12), a layer (14) of adhesive material which acts as a flat shatter-proofing element being attached firmly to the pane on one side, **characterized in that** the other side of the layer of adhesive material is used to bond at least one attachment part (18, 20, 30, 32, 34) to the pane, the attachment part being a reinforcing element (18) for the pane, a retaining element (30, 32, 34) for connecting the pane to the vehicle body or an element (38) connected to the vehicle body, or a shade.

2. Arrangement according to Claim 1, **characterized in that** the attachment part is a panel inner metal sheet (30), a reinforcing profile (18) or a profile (32, 34) which is used as a contact surface for a seal (26), or an adhesive connection (36) to a frame (38) fixed to the body.

3. Arrangement according to Claim 1 or 2,
**characterized in that** the attachment part (18, 20, 30, 32, 34) is arranged in the edge region of the pane (12).

4. Arrangement according to one of the preceding claims, **characterized in that** the layer (14) of adhesive material completely covers at least the transparent region of the pane (12).

5. Arrangement according to one of the preceding claims, **characterized in that** the side of the layer (14) of adhesive material that points away from the pane (12) in the regions outside the region provided with the attachment part (18, 20, 30, 32, 34) is at least partly covered with a cover film (16).

6. Arrangement according to Claim 5, **characterized in that** the cover film (16) is scratch-resistant, has an embossed surface and/or is tinted.

7. Arrangement according to Claim 6, **characterized in that** the cover film (16) is formed from PET, PC or PMMA.

8. Arrangement according to one of the preceding claims, **characterized in that** the adhesive material of the layer (14) is PU, PVB, EVA or ionomers.

9. Arrangement according to one of the preceding claims, **characterized in that** the adhesive material of the layer (14) is applied to the pane (12) in sheet form or film form.

10. Arrangement according to one of the preceding claims, **characterized in that** the pane (12) is a pane of transparent or partly transparent glass.

11. Arrangement according to one of the preceding claims, **characterized in that** the layer (14) of adhesive material towards the edge of the pane (12) does not extend beyond the position of the attachment part (18, 30, 32, 34).

12. Arrangement according to one of the preceding claims, **characterized in that** the region (24) between the attachment part (18) and the edge of the pane (12) is used as a contact surface for a seal (26).

13. Arrangement according to one of the preceding claims, **characterized in that** the arrangement is a panel (10) and the opening is a roof opening.

14. Arrangement according to Claim 13, **characterized in that** the panel (10) is displaceable and the attachment part is a retaining element (20, 30) connected to the displacement mechanism.

15. Arrangement according to one of Claims 1 to 13, **characterized in that** the attachment part is a retaining element (34) which is firmly bonded into a roof frame (38).

16. Arrangement according to one of the preceding claims, **characterized in that** the pane (12) in the region of the attachment part (18, 30, 32, 34) is printed with a frit (22).

17. Arrangement according to Claim 8, **characterized in that** the adhesive material of the layer (14) is a material consisting of ethylene/methacrylic acid copolymers.

18. Arrangement according to one of the preceding claims, **characterized in that** the adhesive material of the layer (14) has a tear strength of at least 15 MJ/m³, preferably at least 25 MJ/m³.

19. Arrangement according to one of the preceding claims, **characterized in that** the adhesive material of the layer (14) has a tensile strength of at least 10 MPa, preferably at least 20 MPa.

20. Arrangement according to one of the preceding claims, **characterized in that** the adhesive material of the layer (14) has a modulus of elasticity of at least 50 MPa, preferably at least 150 MPa.

## Revendications

1. Dispositif pour la fermeture d'une ouverture d'un véhicule, comprenant une vitre (12), une couche (14) agissant comme élément de surface de protection contre les éclats et à base de matériau adhésif étant placée par un côté de façon fixe sur la vitre, **caractérisé en ce que** l'autre côté de la couche à base de matériau adhésif sert à ce qu'au moins une partie rapportée (18, 20, 30, 32, 34) soit collée avec la vitre, la partie rapportée étant un élément de renfort (18) pour la vitre, un élément de retenue (30, 32, 34) pour la liaison de la vitre avec la carrosserie du véhicule ou avec un élément (38) relié à la carrosserie du véhicule ou un écran.

2. Dispositif selon la revendication 1, **caractérisé en ce que** la partie rapportée est une tôle intérieure de couvercle (30), un profilé de renfort (18) ou un profilé (32, 34) servant de surface d'appui pour un joint (26) ou un assemblage collé (36) pour un cadre (38) solidaire de la carrosserie.

3. Dispositif selon la revendication 1 ou 2, **caractérisé en ce que** la partie rapportée (18, 20, 30, 32, 34) est disposée dans la zone périphérique de la vitre (12).

4. Dispositif selon l'une quelconque des revendications précédentes, **caractérisé en ce que** la couche (14) à base de matériau adhésif recouvre complètement au moins la zone de transparence de la vitre (12).

5. Dispositif selon l'une quelconque des revendications précédentes, **caractérisé en ce que** le côté, partant de 1a vitre (12), de la couche (14) à base de matériau adhésif est recouvert dans les zones situées à l'extérieur de la zone dotée de la partie rapportée (18, 20, 30, 32, 34) au moins en partie d'un film de recouvrement (16).

6. Dispositif selon la revendication 5, **caractérisé en ce que** le film de recouvrement (16) est résistant aux rayures, et réalisé avec une surface gaufrée et/ou teinté.

7. Dispositif selon la revendication 6, **caractérisé en ce que** le film de recouvrement (16) est conçu à base de PET, PC ou PMMA.

8. Dispositif selon l'une quelconque des revendications précédentes, **caractérisé en ce que** le matériau adhésif de la couche (14) est le PU, le PVB, l'EVA ou des ionomères.

9. Dispositif selon l'une quelconque des revendications précédentes, **caractérisé en ce que** le matériau adhésif de la couche (14) est appliqué sous forme de plaque ou de film sur la vitre (12).

10. Dispositif selon l'une quelconque des revendications précédentes, **caractérisé en ce que** la vitre (12) est une vitre à base de verre transparent ou semi-transparent.

11. Dispositif selon l'une quelconque des revendications précédentes, **caractérisé en ce que** la couche (14) à base de matériau adhésif ne s'étend pas au-delà de la position de la partie rapportée (18, 30, 32, 34) en direction du bord de la vitre (12).

12. Dispositif selon l'une quelconque des revendications précédentes, **caractérisé en ce que** la zone (24) entre la partie rapportée (18) et le bord de la vitre (12) sert de surface d'appui pour un joint (26).

13. Dispositif selon l'une quelconque des revendications précédentes, **caractérisé en ce que** le dispositif est un couvercle (10) et l'ouverture est une ouverture de toit.

14. Dispositif selon la revendication 13, **caractérisé en ce que** le couvercle (10) est réglable et que la partie rapportée est un élément de retenue (20, 30) relié au mécanisme de réglage.

15. Dispositif selon l'une quelconque des revendications 1 à 13, **caractérisé en ce que** la partie rapportée est un élément de retenue (34) qui est collé de façon fixe dans un cadre de toit (38).

16. Dispositif selon l'une quelconque des revendications précédentes, **caractérisé en ce que** la vitre (12) est imprimée avec une fritte (22) dans la zone de la partie rapportée (18, 30, 32, 34).

17. Dispositif selon la revendication 8, **caractérisé en ce que** le matériau adhésif de la couche (14) est un matériau à base de copolymère d'éthylène/acide méthacrylique.

18. Dispositif selon l'une quelconque des revendications précédentes, **caractérisé en ce que** le matériau adhésif de la couche (14) présente une résistance à la déchirure d'au moins 15 MJ/m³, de préférence au moins 25 MJ/m³.

19. Dispositif selon l'une quelconque des revendications précédentes, **caractérisé en ce que** le matériau adhésif de la couche (14) présente une résistance à la traction d'au moins 10 MPa, de préférence au moins 20 MPa.

20. Dispositif selon l'une quelconque des revendications précédentes, **caractérisé en ce que** le matériau adhésif de la couche (14) présente un module d'élasticité d'au moins 50 MPa, de préférence au moins 150 MPa.
